# EUROPEAN PATENT APPLICATION

(11) **EP 2 105 295 A1**
(43) Date of publication of application: **30.09.2009**
(21) Application number: 07832001.7
(22) Date of filing: 16.11.2007
(51) Int. Cl.: B32B 5/02, B32B 15/14, G10K 11/16, G10K 11/162

(54) **SOUND-INSULATING MULTILAYERED STRUCTURE AND PROCESS FOR PRODUCING THE SAME**

(30) Priority: 17.01.2007 JP 2007007658
(71) Applicant: Central Glass Co., Ltd., Ube-shi Yamaguchi 755-8580 (JP)
(72) Inventor: KAMIKAWA, Yoshiaki, Kasugai-shi Aichi 486-0804 (JP)
(74) Representative: Gulde Hengelhaupt Ziebig & Schneider
(86) International application number: PCT/JP2007/072271
(87) International publication number: WO 2008/087792

(57) **Abstract**

Herein provided is a sound-insulating laminated structure which is excellent in the ability of insulating low frequency sounds whose frequency falls within the range of from 200 to 1000 Hz.

The sound-insulating laminated structure comprises a first glass wool layer, a metal foil layer free of any opening and a second glass wool layer. The first and second glass wool layers are ones each prepared by collecting and combining short glass fibers through the application of an uncured thermosetting phenol resin to the short glass fibers to thus give a web of glass wool prepreg and then molding, with heating, the web into a sound-insulating laminated structure having a desired shape.

## Description

### Technical Field

The present invention relates to a sound-insulating laminated structure having an excellent ability of insulating or absorbing low frequency sounds.

### Technical Background Art

There has conventionally been used glass wool, for instance, around the engines of automobiles in order to insulate noises from the engines or the like. Such glass wool used therein has been produced by applying an uncured thermosetting resin to spun short glass fibers, collecting and combining the short glass fibers to thus give a web and then pressure-molding the resulting web with heating. The temperature is considerably increased around, for instance, an engine during the operation thereof and therefore, various members used in the surroundings of the engine should be heat-resistant so that it can endure the temperature on the order of not less than 200°C or even not less than 250°C. For this reason, phenolic resins have been used as the foregoing thermosetting resins (see Patent Document 1 specified below).

Recently, the so-called hybrid type automobiles have come into widespread use, which are ones each comprising a combination of a gasoline or diesel engine and an electric motor. The automobile equipped with an electric motor is quite excellent in the silentness and accordingly, the low frequency sounds, generated by the electric motor, on the order of not higher than 1000 Hz and more specifically those ranging from 200 to 1000 Hz have recently been recognized as noises. However, it is difficult that the aforementioned glass wool formed by pressure-molding with heating would insulate the sounds whose frequency falls within the range specified above and accordingly, there has been desired for the development of a novel sound-insulating material.

Patent Document 2 specified below discloses, as a structure for insulating the foregoing low frequency sounds, a sound-insulating material having such a structure that a fibrous material such as glass wool is laminated with a nonwoven fabric consisting of, for instance, polyethylene terephthalate serving as an intermediate layer. This Patent Document 2 discloses that the sound insulation property of the structure with respect to the foregoing low frequency sounds can be improved by making the air-permeability of the nonwoven fabric lower.

In addition, there has likewise been disclosed a sound-insulating structure in which layers of a fibrous material such as glass wool comprise a layer of a different material inserted therein as an intermediate layer. For instance, Patent Document 3 specified below uses an iron plate as such an intermediate layer and Patent Document 4 uses a resin film in which fine pores are uniformly formed in such a manner that the area of the film occupied by the fine pores (rate of pores) falls within the range of from 0.05 to 5%.
Patent Document 1: Japanese Un-Examined Patent Publication 2001-337681;
Patent Document 2: Japanese Un-Examined Patent Publication 2003-19930;
Patent Document 3: Japanese Un-Examined Utility Model Publication Sho 61-111146; and
Patent Document 4: Japanese Un-Examined Patent Publication 2006-137160.

### Disclosure of the Invention

### Problems That the Invention is to Solve

Although the sound insulation property of a structure can be improved by increasing the thickness of the structure, the permissible increase of the thickness thereof is limited in a spatially restricted place such as the place around a vehicle engine. Moreover, the structure should be formed into any desired shape depending on the kind of materials to be used, which in turn limits the kinds of materials used for forming the structure. In addition, the structure is used as a part surrounding the vehicle engine, it should be heat-resistant so that it can endure the temperature on the order of not less than 200°C. Furthermore, the structure should maintain its shape and construction even under the influence of any vibration generated due to the operation of the engine.

Accordingly, it is an object of the present invention to provide a structure excellent in the ability to insulate low frequency sounds whose frequency falls within the range of from 200 to 1000 Hz, while taking into consideration the foregoing restrictions encountered when selecting materials for forming the structure and the limitation in the thickness. For instance, the overall thickness of the structure is herein limited to a level falling within the range of from 5 to 100 mm, preferably 10 to 70 mm, and more preferably 15 to 40 mm.

### Means for the Solution of the Problems

The present invention aims to provide a structure which has good heat resistance so that it can be used around an engine and which may have any desired shape. Glass wool may easily provide an article having any desired shape by appropriately selecting the shape of a mold when molding the same with heating. In addition, to impart the foregoing low frequency sound-insulating property to the structure, the material for the structure should be excellent in the ability of insulating sounds whose frequency falls within the range specified above and it should be able to be formed into a desired shape. Accordingly, the structure should be formed from a material excellent in the sound-insulating property and heat resistance and likewise excellent in the flexibility.

The transmission loss encountered when sounds transmit through a laminated structure is greatly influenced by the magnitude of the rigidity of the material used for forming an intermediate layer of the laminated structure. If the rigidity of the material for the intermediate layer is relatively low, the transmission loss would be able to enhance the ability of insulating the sounds passing though the structure while making the most use of the resonance effect observed between the intermediate layer and the materials positioning at both sides thereof. Further, it has been said that when intending to use such a resonance effect, the use of a porous material is required so that the intermediate layer may almost show the same effect achieved by a layer of air.

However, even a porous material has an elastic modulus higher than that of the air and accordingly, to achieve a sound-insulating effect approximately identical to that observed for the air layer, the thickness of the intermediate layer must be increased or the intermediate layer must be so designed that it has a high porosity although there would be a risk of impairing the strength of the resulting structure. However, it is difficult to adopt such a design in the present invention since the invention intends to provide a structure having such a limited thickness.

On the other hand, if increasing the rigidity of a material used for forming such an intermediate layer, the transmission loss of the sounds passing through a structure would be almost controlled or approximated by the mass rule and therefore, the mass and thickness of a material used should be increased when intending to enlarge the transmission loss thereof. However, it is likewise difficult in the present invention to select such a material since the invention aims to produce a structure having such a limited thickness.

Under the foregoing hard conditions, the inventor of this invention has conducted various investigations of various materials to be used and structures to develop a structure which can accomplish the foregoing object and have found that the use of a metal foil layer as an intermediate layer for such a structure would permit the improvement of the ability of insulating low frequency sounds whose frequency ranges from 200 to 1000 Hz.

More specifically, the sound-insulating laminated structure according to the present invention is one comprising a first glass wool layer, a metal foil layer free of any opening and a second glass wool layer, wherein the first and second glass wool layers have been each prepared by applying an uncured thermosetting phenol resin onto short glass fibers thereof and then collecting and combining the short glass fibers to thus give a web and then molding, with heating, the web into a desired shape.

In the meantime, the metal foil having openings, which has been used as the intermediate layer for the conventional sound-insulating laminated structure, is composed of a metal and therefore, the elastic modulus of the material per se should be considerably greater than that observed for the layer of air used in the structure comprising such a layer of air and an intermediate layer. Contrary to this, the inventor of this invention has unexpectedly found that the use of a metal foil free of any opening as an intermediate layer would permit the improvement of the ability of insulating low frequency sounds whose frequency falls within the range of from 200 to 1000 Hz, and especially sound waves having a frequency ranging from 300 to 900 Hz and, in particular, sound waves having a frequency ranging from 400 to 900 Hz, and further low frequency sound waves having a frequency ranging from 400 to 700 Hz.

Although not being bound by any specific theory, it would be presumed as follows: In the structure comprising a metal foil as an intermediate layer, the metal foil shows flexibility to some extent, the flexibility thereof may in turn induce the resonance effect between the sounds transmitting through the structure: "first glass wool layer/metal foil layer free of any opening/second glass wool layer" and the sounds reflected from the same and as a result, the structure is thus improved in the sound-insulating property.

The foregoing metal foil layer free of any opening is preferably integrated, into a body, with the both glass wool layers through the action of the uncured phenol resin incorporated into the web of the short glass fibers. If the structure has such a construction, the metal foil layer free of any opening and the both glass wool layers can be united in a body without using any other material and accordingly, it would be quite easy for the structure to show its resonance effect due to the presence of the metal foil layer.

In the present invention, the overall thickness of the structure is set at a level ranging from 5 to 100 mm, preferably 10 to 70 mm, and more preferably 15 to 40 mm, while the metal foil layer free of any opening is arranged at a position situating at a distance, from the outermost face of the structure, of 0.1 to 0.5 times, preferably 0.15 to 0.45 times, more preferably 0.2 to 0.4 times and more particularly preferably 0.3 to 0.4 times the thickness of the structure, in the direction of the thickness thereof, in order to achieve a higher sound-insulating effect while the thickness of the structure is limited to such a low level specified above.

Further, the structure according to the present invention, which comprises a first glass wool layer, a metal foil layer free of any opening and a second glass wool layer, may further comprise a metal foil layer having openings which may be put on top of the first or second glass wool layer. The structure of the present invention having the foregoing construction has an improved ability of insulating low frequency sounds having a frequency ranging from 200 to 1000 Hz, while simultaneously reducing the ability of insulating middle frequency sounds having a frequency ranging from 1000 to 2000 Hz. The use of such a metal foil having openings is quite desirable for the improvement of the ability of insulating sounds having a frequency falling within the range specified above. In this respect, if the structure is also provided with a metal foil layer as an intermediate layer, this accordingly results in the possible interactions between the sounds passing through the metal foil layer having openings and the metal foil layer free of any opening to thus improve the effect of insulating low frequency sounds having a frequency ranging from 200 to 1000 Hz.

More specifically, the laminated structure of the present invention preferably comprises a first glass wool layer, a metal foil layer free of any opening, a second glass wool layer, a metal foil layer having openings and a third glass wool layer, which are laminated in this order; or a third glass wool layer, a metal foil layer having openings, a first glass wool layer, a metal foil layer free of any opening and a second glass wool layer, which are likewise laminated in this order. The structure having such a construction is preferred since it is quite suitable for causing interactions between the sounds passing through the metal foil layer having openings and the metal foil layer free of any opening. In this respect, when the structure comprises one each of the metal foil layer free of any opening and the metal foil layer having openings, the resulting structure of the present invention includes three glass wool layers.

The metal foil layer having openings is preferably integrated, into a body, with the both glass wool layers existing at both sides thereof through the action of the uncured phenol resin incorporated into the web of the short glass fibers constituting the glass wool layers. The structure of the present invention having such a construction may thus easily show its resonance effect observed between the metal foil layer free of any opening and the metal foil layer having openings.

In the present invention, the "metal foil layer free of any opening" means a metal foil free of any hole passing from the surface to the back face of the foil (through hole) and therefore, any gas cannot pass or permeate through the metal foil. On the other hand, the "metal foil layer having openings" means a metal foil provided with through holes, through which a gas can pass.

In addition, the (imaginary) center line of the metal foil layer having openings is arranged at a position situating at a distance, from the outermost face of the structure or the face thereof exposed to the air, of 0.1 to 0.5 times, preferably 0.15 to 0.45 times, more preferably 0.2 to 0.4 times and more particularly preferably 0.3 to 0.4 times the thickness of the structure, in the direction of the thickness thereof, in order to achieve a higher sound-insulating effect while the thickness of the structure is limited to such a level specified above. The outermost face of the structure, which can serve as the reference from the viewpoint of achieving a higher sound-insulating effect while using a limited thickness of the structure, is preferably one arranged opposite to the outermost face of the structure which is used or serves as the reference for arranging the metal foil layer free of any opening.

The metal foil layer free of any opening or the metal foil layer having openings has in general a thickness ranging from 20 to 150 µm, preferably 40 to 120 µm, and more preferably 50 to 90 µm. This is because, if the thickness thereof exceeds 150 µ m, it is quite difficult to have the flexibility of the metal foil, while if it is less than 20 µm, it is difficult to handle such a metal foil and the production efficiency of the structure may sometimes be reduced. In addition, if the thickness of the metal foil is too small, the used structures can be broken down and separated into the metal portions and the glass wool portions only with great difficulty after the recovery thereof from the consumers. This accordingly greatly reduces or impairs the recycling ability of the structure.

The sound-insulating laminated structure of the present invention can easily be prepared by collecting and combining short glass fibers after adhering the short glass fibers to one another through the application of an uncured thermosetting phenol resin to the same to thus give a web of glass wool prepreg, then sandwiching a metal foil between two layers of the glass wool prepreg to thus give a laminate structure and subjecting the laminate structure to pressure-molding with heating.

### Effects of the Invention

The structure of the present invention is formed from a glass wool layer and a metal foil and therefore, the structure can provide a sound-insulating laminated structure excellent in the heat resistance, and likewise excellent in the ability of insulating low frequency sounds having a frequency ranging from 200 to 1000 Hz without unreasonably increasing the thickness thereof. Accordingly, the structure of the present invention can effectively be used as not only the sound-insulating material for the construction such as houses and buildings, but also as the sound-insulating material used around, for instance, the motors and engines of compressors, railway vehicles and automobiles, in particular, around the motors and engines of automobiles.

### Best Mode for Carrying Out the Invention

The sound-insulating laminated structure of the present invention comprises a first glass wool layer, a metal foil layer free of any opening and a second glass wool layer, wherein the first and second glass wool layers are glass wool layers formed by collecting and combining short glass fibers after adhering the short glass fibers through the application of an uncured thermosetting phenol resin thereto to thus give a web of glass wool prepreg and then subjecting the prepreg web to molding with heating.

The glass wool is a material widely used as a fibrous sound-insulating and heat-insulating material and it is typically produced according to the following method:
An uncured thermosetting phenol resin is adhered to short glass fibers which are spun according to the centrifugal spinning technique and have an average diameter ranging from 3 to 20 µm, preferably 5 to 15 µm, and an average length ranging from 1 to 100 mm and preferably 3 to 80 mm, by spraying the same through, for instance, a spray nozzle to thus form a glass wool prepreg. The volume density of the glass wool prepreg is preferably set at a value ranging from, for instance, 5 to 50 kg/m³, preferably 8 to 20 kg/m³. In this respect, the use of, for instance, a mold for processing a material into an article having a desired shape would permit the pressure-molding, with heating, the web-like glass wool prepreg and the control of the thickness thereof and this results in the formation of a glass wool layer having a volume density ranging from 10 to 500 kg/m³, and preferably 15 to 300 kg/m³.

The foregoing pressure-molding is preferably carried out under the following conditions: a temperature, for instance, ranging from 150 to 350°C; a pressure, for instance, ranging from 2×10⁴ to 2×10⁶ Pa, preferably 2×10⁵ to 2×10⁶ Pa; and a molding time, for instance, ranging from 10 to 3600 seconds and preferably 20 to 600 seconds.

In the structure according to the present invention, the volume densities of the glass wool layers such as the first glass wool layer and the second glass wool layer and even the third glass wool layer may be set at the same level or the volume densities of the foregoing glass wool layers may be different from each other. When the volume densities of the glass wool layers are set at different values respectively, the volume density of each glass wool layer is so controlled that the glass wool layer has a volume density of not higher than 30 times, preferably not higher than 20 times, more preferably not higher than 10 times and particularly preferably not higher than 5 times that of the glass wool layer having the smallest volume density, which is defined to be a reference.

The smallest volume density of the glass wool layer in general ranges from 10 to 200 kg/m³, and preferably 15 to 500 kg/m³.

In this connection, the average diameter of the fibers and the density of articles used in the present invention are determined according to the method specified in "JIS A 9504 (2004); "Heat-Insulating Materials of Artificially Prepared Mineral Fibers." Moreover, the average length of fibers used in the present invention is an average value obtained by determining the length of the fibers extracted when determining the average diameter thereof and then dividing the sum of the values thus determined by the number of the measurements and specifically samples (20 g each) are collected from an article at arbitrarily selected 3 positions thereon, fibers (20 fibers each) are further extracted from the foregoing samples and then the sum of the lengths of these fibers is divided by the total number of measurements to thus calculate an average length of fibers.

The amount of the uncured phenol resin to be adhered to the short glass fibers is preferably so controlled that the volume density of the resulting glass wool falls within the range specified above and the specific amount of the phenol resin ranges from 0.05 to 0.2 times the total amount of the short glass fibers.

The phenol resin used herein is, for instance, one obtained by condensing a phenolic compound such as phenol, xylenol or cresol with an aldehyde such as formaldehyde or paraformaldehyde at a mixing ratio ranging from 1.0:0.5 to 1.0:0.9, preferably in the presence of a catalyst such as an acid catalyst selected from oxalic acid and zinc acetate or a catalyst consisting of a divalent metal salt. The phenol resin forms a three dimensional network structure after the resin is cured. Among the thermosetting synthetic resins, the phenol resin is particularly excellent in the heat resistance and the flame-retardant properties and likewise excellent in the resistance to oils and resistance to chemicals and accordingly, it is quite suitably used in the structure of the present invention.
In the present invention, a variety of binders currently used in the production of glass wool and rock wool can be used without any particular restriction as the phenol resins and, in particular, water-soluble phenol resins are suitably used in the present invention. Examples of such phenol resins usable herein include resol-type phenol resins and urea-modified resol-type phenol resins.

The metal foil used as the metal foil layer free of any opening and the metal foil layer having openings in the structure according to the present invention is one prepared from a metal which can easily be formed into a foil and which has a melting point of not less than 200°C, preferably not less than 250°C and more preferably not more than 2000°C. Examples of such metals preferably used herein include aluminum, silver, gold, copper, nickel, iron and stainless steel. Among them, preferred is aluminum. Examples of aluminum preferably used herein include pure aluminum products, for instance, Aluminum of 1000 Series as specified in JIS H4000 "Plates and Wires Made of Aluminum and Aluminum Alloys (2006)" such as Al1050, Al1070, Al1085, Al1100, and Al1200; and aluminum alloys having relatively good processability, for instance, Al-Mn type alloys called Aluminum of 3000 Series such as Al3003, Al3004 and Al3104.

In case of the metal foil having openings, it is preferred to use metal foils each having a rate of openings in general ranging from 10 to 80%, preferably 15 to 70% and further preferably 20 to 60%. In addition, the size of each opening may be set at a level on the order of 20 to 1000 mm², preferably 50 to 600 mm², and more preferably 80 to 500 mm², and the shapes thereof usable herein include, for instance, circular, rectangular, and polygonal ones.

The laminated structure of the present invention can preferably be prepared by sandwiching a metal foil free of any opening between two layers of glass wool prepreg and then subjecting the resulting assembly to pressure-molding with heating. Regarding this superposed structure prior to the molding, the structure of the present invention may alternatively be prepared by sandwiching each of a metal foil free of any opening and a metal foil having openings between corresponding layers of glass wool prepreg so that the resulting superposed structure has the construction defined above and then subjecting the superposed structure to pressure-molding with heating.

Upon the pressure-molding with heating, the uncured phenol resin adhered to the short glass fibers can penetrate into the glass wool layer and even to the metal foil layers to thus unite the metal foil layers and the glass wool layers in a body. The region of the glass wool layers which are impregnated with the phenol resin may appropriately be controlled by adjusting the pressure, temperature and time of the pressure-molding operation.

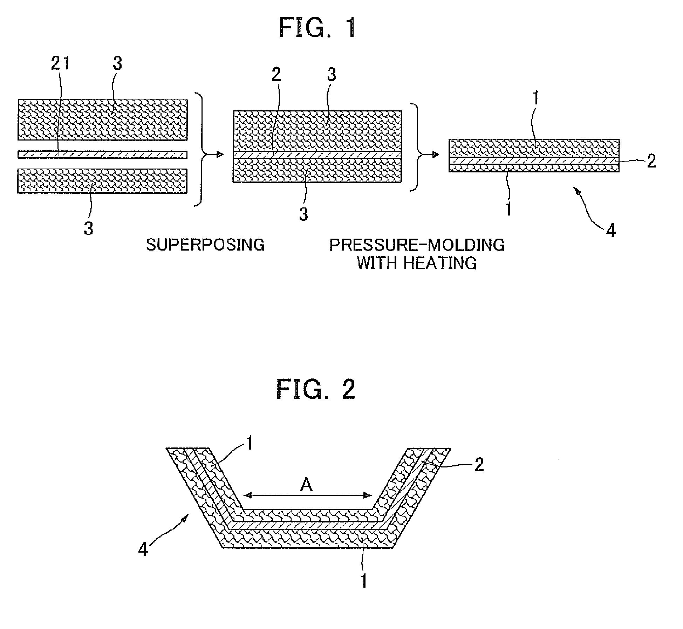

Fig. 1 is a diagram given for explaining the processes for forming the structure according to the present invention. Fig. 2 is a diagram showing an embodiment of the sound-insulating laminated structure of the present invention.

More specifically, a laminated structure is produced by sandwiching a metal foil 21, which will later serve as a metal foil layer 2 free of any opening, between two layers of glass wool prepreg 3 to which an uncured phenol resin has been applied; and then subjecting the resulting laminated structure to pressure-molding with heating to thus produce a sound-insulating laminated structure 4 which comprises a first glass wool layer 1, a metal foil layer 2, and a second glass wool layer 1 arranged and united, in a body, in this order from the top.

The sound-insulating laminated structure of the present invention can be molded into a structure having any desired shape if appropriately selecting the shape of the mold used in the step for pressure-molding of the same. Fig. 2 shows an embodiment of the structure of the present invention and the structure having the construction as depicted in this figure can serve as a sound-insulating laminated structure of the present invention excellent in the sound-insulating property and having a bent portion A.

The present invention will hereunder be described in more detail with reference to the following Examples and Comparative Examples.

### Example

Short glass fibers each having an average diameter of 7 µm and an average length of 30 mm were prepared by the centrifugal spinning technique and an uncured water-soluble phenol resin (resol type one having a solid content of 30% by mass) was adhered to the spun short glass fibers by spraying the same on the fibers in an amount of 0.1 time (by mass) that of the short glass fibers using a spray gun. The short glass fibers provided with the uncured phenol resin adhered thereto were fed to a fiber-collector in which the fibers were integrated through aspiration to thus give a glass wool prepreg having a volume density of 16 kg/m³.

On the other hand, an aluminum metal foil having a predetermined thickness (20 µm, 50 µm and 85 µm) was sandwiched between two layers of the foregoing glass wool prepreg to form a superposed structure and then the superposed structure was heated to 250°C for 200 seconds while applying a pressure of 2×10⁵ Pa to thus give a laminated structure having an overall thickness of 30 mm and the following construction: glass wool layer/metal foil layer free of any opening/glass wool layer.

In the meantime, the volume densities of the two glass wool layers used in this Example are identical to one another since these two layers are prepared from the materials or the glass wool prepregs having the same volume density. Regarding the glass wool layer, laminated structures provided with glass wool layers having a variety of volume densities can be prepared by variously controlling the thickness of the glass wool prepreg used. Thus, the position of the metal foil layer free of any opening in the resulting sound-insulating laminated structure can be determined depending on the difference in the volume density of the glass wool layers to be used.

Summarized in the following Table 1 are the volume density of the glass wool layer of each resulting sound-insulating laminated structure prepared in this Example and the position of the metal foil layer in each resulting sound-insulating laminated structure along the total thickness thereof. The position of each metal foil layer can be determined by dividing the distance extending from the outermost face of each sound-insulating laminated structure to the corresponding metal foil layer by the total thickness of the sound-insulating laminated structure in question. In Table 1, the abbreviation "GW" means the glass wool. In Table 1, "Not Used" means that the corresponding comparative sample is given by way of comparison and is free of any metal foil, or a structure which does not comprise any metal foil layer, or a structure comprising a single glass wool layer. Moreover, the numerical value appearing in each sample name after the hyphen (-) represents the thickness of the metal foil layer used in each sample structure.

**Table 1:**

| Sample Name | Volume Density of GW(kg/m³) | Position of M.F.L.* | Thickness of Metal Foil (µm) |
|---|---|---|---|
| Sample 1-20 | 33.3 | 0.5 | 20 |
| Sample 1-50 | 33.3 | 0.5 | 50 |
| Sample 1-85 | 33.3 | 0.5 | 85 |
| Sample 1-0 | 33.3 | -- | Not Used |
| Sample 2-20 | 50 | 0.333 | 20 |
| Sample 2-50 | 50 | 0.333 | 50 |
| Sample 2-85 | 50 | 0.333 | 85 |
| Sample 2-0 | 50 | -- | Not Used |
| Sample 3-20 | 66.6 | 0.25 | 20 |
| Sample 3-50 | 66.6 | 0.25 | 50 |
| Sample 3-85 | 66.6 | 0.25 | 85 |
| Sample 3-0 | 66.6 | -- | Not Used |
| Sample 4-20 | 83.3 | 0.2 | 20 |
| Sample 4-50 | 83.3 | 0.2 | 50 |
| Sample 4-85 | 83.3 | 0.2 | 85 |
| Sample 4-0 | 83.3 | -- | Not Used |
| Sample 5-20 | 100.3 | 0.167 | 20 |
| Sample 5-50 | 100.3 | 0.167 | 50 |
| Sample 5-85 | 100.3 | 0.167 | 85 |
| Sample 5-0 | 100.3 | -- | Not Used |

| | | | |
|---|---|---|---|
| *: M.F.L. means the metal foil layer free of any opening. | | | |

### [Evaluation of the Sound-Insulating Property of Example]

The rates of sound-insulation of the sound-insulating laminated structures as the sample Nos. 1 to 5 with respect to the sounds perpendicularly incident upon the samples were determined according to the method specified in the appendix B of JIS A6301 "Sound-Insulating Materials (2000)." In this evaluation method, the thinner glass wool layer was positioned on the side of the sound source.

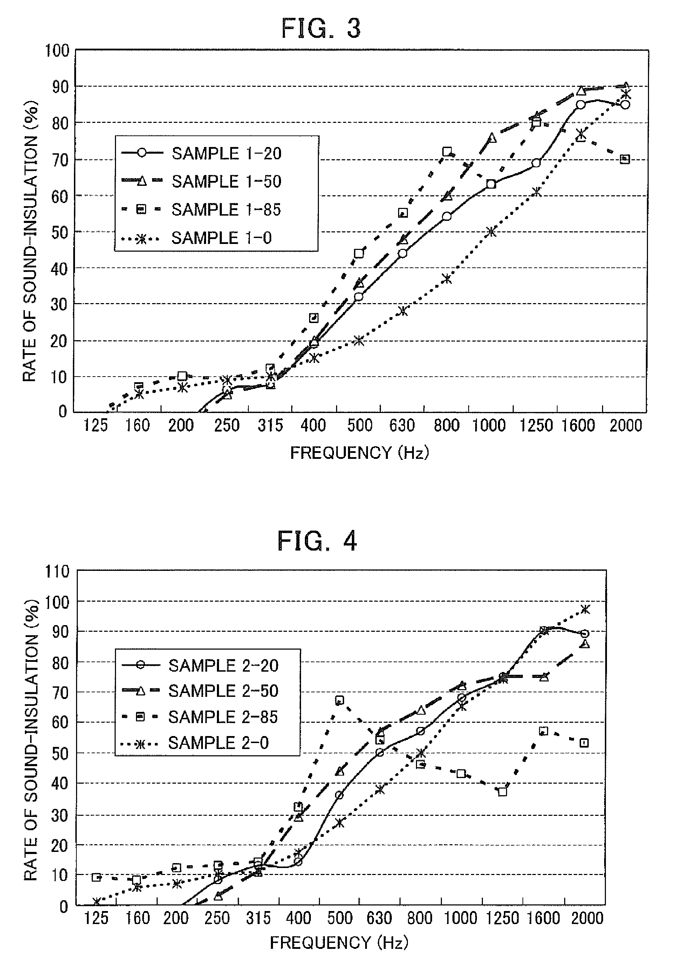

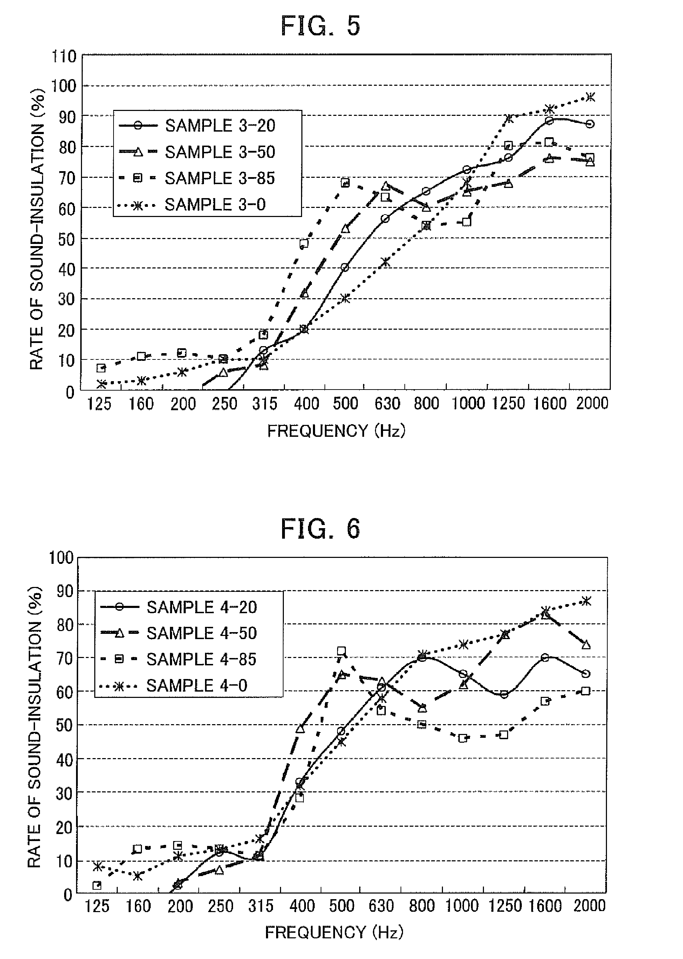

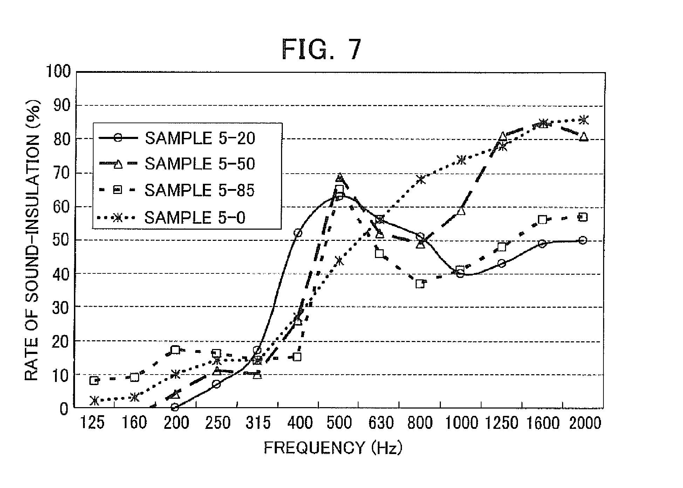

The results thus obtained are plotted on the attached Figures 3 to 7. As will be seen from these figures, it was found that the sound-insulating laminated structure of the present invention was excellent in the low frequency sound-insulating ability.

### Brief Description of the Drawings

Fig. 1 is a schematic diagram for explaining the processes of producing the sound-insulating laminated structure of the present invention.
Fig. 2 is a diagram showing an embodiment of the sound-insulating laminated structure of the present invention.
Fig. 3 is a diagram showing the results obtained when the sample 1 prepared in the foregoing Example of the present invention was inspected for the sound- insulating ability.
Fig. 4 is a diagram showing the results obtained when the sample 2 prepared in the foregoing Example of the present invention was inspected for the sound- insulating ability.
Fig. 5 is a diagram showing the results obtained when the sample 3 prepared in the foregoing Example of the present invention was inspected for the sound- insulating ability.
Fig. 6 is a diagram showing the results obtained when the sample 4 prepared in the foregoing Example of the present invention was inspected for the sound- insulating ability.
Fig. 7 is a diagram showing the results obtained when the sample 5 prepared in the foregoing Example of the present invention was inspected for the sound- insulating ability.

### Explanation of the Letters or Numerals

1 · · Glass Wool Layer
2 · · Metal Foil Layer Free of Any Opening
3 · · Glass Wool Prepreg
4 · · Sound-Insulating Laminated Structure
21 · · Metal Foil
A · · Bent Portion.

## Claims

1. A sound-insulating laminated structure comprising a first glass wool layer, a metal foil layer free of any opening and a second glass wool layer, wherein the first and second glass wool layers are ones each prepared by collecting and combining short glass fibers through the application of an uncured thermosetting phenol resin to the glass fibers to thus give a web of glass wool prepreg and then molding, with heating, the web into a desired shape.

2. The sound-insulating laminated structure as set forth in claim 1, wherein the overall thickness of the structure ranges from 5 to 100 mm, and the metal foil layer free of any opening is arranged at a position situating at a distance, from the outermost face of the structure, of 0.1 to 0.5 times the thickness of the structure, in the direction of the thickness thereof.

3. The sound-insulating laminated structure as set forth in claim 1, wherein the metal foil layer has a thickness ranging from 20 to 150 µm.

4. A method for the preparation of a sound-insulating laminated structure as set forth in claim 1 comprising the steps of:
(1) providing a web of glass wool prepreg by collecting and combining short glass fibers through the application of an uncured thermosetting phenol resin to the short glass fibers;
(2) sandwiching a metal foil free of any opening between two layers of the foregoing web to thus form a laminated structure having a three-layer structure; and
(3) pressure-molding the laminated structure prepared in the step (2) with heating.
